# EUROPÄISCHE PATENTSCHRIFT

(11) **EP 2 199 765 B1**
(45) Veröffentlichungstag und Bekanntmachung des Hinweises auf die Patenterteilung: **16.10.2013**
(21) Anmeldenummer: 08172176.3
(22) Anmeldetag: 18.12.2008
(51) Int. Cl.: B41F 33/00, G01J 3/02, G01J 3/50, G01J 3/46

(54) **Verfahren und Handfarbmessgerät zur Ausmessung einer Farbmesstafel**
Method and handheld colour measuring device for measuring a colour measuring table
Procédé et appareil de mesure de couleur manuelle destinés à la mesure d'une échelle de mesure de couleur

(43) Veröffentlichungstag der Anmeldung: 23.06.2010
(73) Patentinhaber: X-Rite Europe GmbH, 8105 Regensdorf (CH)
(72) Erfinder: von Orelli, Adrian, 8008, Zürich (CH)
(74) Vertreter: Schwabe - Sandmair - Marx

(56) Entgegenhaltungen:
- EP-A- 0 064 024
- EP-A- 1 180 898
- EP-A- 1 314 972
- EP-A- 1 775 565
- WO-A1-2006/117598

## Beschreibung

Die Erfindung betrifft ein Verfahren und ein dafür geeignetes Handfarbmessgerät zur Ausmessung einer Farbmesstafel gemäss dem Oberbegriff des unabhängigen Anspruchs 1 bzw. des unabhängigen Anspruchs 5.

Um den Effekt des Aufhellers im Papier für unterschiedliche spektrale Verteilungen der Ziel-Betrachtungs-Beleuchtung richtig bewerten zu können, sind heute z.B. aus den Dokumenten EP1775565B1 und EP Pat.Anm.Nr, EP07110191.9 vom 13.06.2007 (entsprechend US Pat. Anm. Nr. US12/136373 vom 10.06.2008) Messverfahren bekannt, bei welchen zwei Messungen mit unterschiedlichen Beleuchtungsspektren durchgeführt werden und die daraus resultierenden Messwerte anhand eines mathematischen oder physikalischen Modells ausgewertet werden. Die in diesen Dokumenten beschriebenen Messverfahren beruhen auf einer Messung mit einer weissen Beleuchtung und einer anschliessenden Messung mit ausschliesslicher UV Beleuchtung.

Für Color Management Anwendungen werden üblicherweise als Testcharts bezeichnete Farbmesstafeln eingesetzt. Solche Farbmesstafel bzw. Testcharts umfassen normalerweise eine zweidimensionale Anordnung von Farbmessfeldern; im einfachsten Fall kann ein Testchart aber auch aus einer einzigen Reihe von Farbmessfeldern bestehen, wobei dann meistens von einem Farbmessstreifen gesprochen wird. Für die (reihen- bzw. zeilenweise) Ausmessung von solchen Testcharts im abtastenden (scannenden) Betrieb sind verschiedene Handfarbmessgeräte bekannt, z.B. die Geräte "il" und "ColorMunki" der Firma X-rite Europe GmbH, Regensdorf, Schweiz. Weitere Handfarbmessgeräte für den scannenden Betrieb sind in den Dokumenten WO2006/117598A1, US7345763B2 und US6590648B1 in allen Einzelheiten beschrieben.

Bei der Ausmessung von Testcharts im scannenden Betrieb, z.B. mittels der genannten bekannten Geräte "il" oder "ColorMunki", wird das Handfarbmessgerät vorzugsweise mittels einer mechanischen Führung über jeweils eine Reihe der Farbmessfelder auf dem Testchart geführt, wobei in kurzen Abständen aufeinanderfolgend selbsttätig eine Vielzahl von Einzelmessungen vorgenommen werden. Die Position der Farbmessfelder auf dem Testchart wird aus den spektralen Messdaten ermittelt, indem die Messwertunterschiede der aufeinanderfolgenden Messungen ausgewertet werden. Eine detaillierte Erläuterung findet sich z.B. im Dokument US6590648B1. Diese Methode erfordert, dass ein minimaler Farbunterschied zwischen benachbarten Farbfeldern nicht unterschritten wird. Z.B. aus dem Dokument US7345763B2 sind ferner auch schon für den scannenden Betrieb geeignete Farbmessgeräte mit einem integrierten Wegmesssensor bekannt, welcher die Position des Farbmessgeräts während des Scanvorgangs bestimmt. Die Positionskenntnis des Gerätes bei jeder Einzelmessung kann dann bei der Messfelderkennung unterstützend herangezogen werden.

Wird bei einem Messvorgang ausschliesslich eine UV-Beleuchtung eingesetzt, ist für die Bestimmung der Messfelderposition aus den Messdaten ein ausreichender Unterschied in der Reflektion der benachbarten Farbfelder im UV-Bereich erforderlich. Dies bedeutet jedoch eine massive Einschränkung bei der Gestaltung des Testcharts.

Die EP 1 180 898 beschreibt ein Verfahren und Vorrichtung zur farbmetrischen Ausmessung einer zweidimensionalen Vorlage. Für die farbmetrische Ausmessung einer zweidimensionalen Vorlage wird in einem ersten Schritt die Vorlage mittels einer farbtauglichen fotoelektrischen Abtasteinrichtung punktweise fotoelektrisch abgetastet, und aus den dabei gewonnenen Abtastwerten wir eine digitale Farbdarstellung der Vorlage erzeugt. In einem zweiten Schritt werden aus der digitalen Farbdarstellung der Vorlage nach Methoden der Bildverarbeitung mittels eines Rechners geeignete Messpositionen ermittelt. In einem dritten Schritt wird der Farbmesskopf rechnergesteuert automatisch an diese ermittelten Messpositionen gefahren und die Vorlage an diesen Messpositionen farbmetrisch ausgemessen. Die dabei gewonnen Farbmesswerte können z.B. zur Erzeugung von Geräteprofilen oder zur farbmetrischen Regelung von Ausgabegeräten weiterverarbeitet werden. Als Abtasteinrichtung wird vorzugsweise ein hochauflösender Flachbett- oder Einzugscanner oder eine digitale Kamera verwendet. Der Farbmesskopf ist vorzugsweise ein Spektralmesskopf.

Die EP 0 064 024 A1 beschreibt ein Verfahren und Vorrichtung zur farbmetrischen Analyse eines gedruckten Farbmessstreifens. Auf einem Messtisch befindet sich eine die auszumessenden Druckbögen überspannende Brücke, auf der ein Messwagen mit einem Dreifarben-Simultan-Messkopf hin- und herbeweglich angeordnet ist. Zur Steuerung der Bewegungs- und Messabläufe sowie zur Auswertung der Messdaten sind ein Klein-Rechner mit integriertem Bildschirm-Terminal und ein vom Rechner kontrolliertes Prozessorsystem mit den nötigen Schnittstellen vorgesehen. Die Analyse des auf dem Druckbogen befindlichen Farbmessstreifens erfolgt in zwei Phasen. In einem ersten, sogenannten Erkennungslauf wird der Messstreifen zwecks Analyse seines Aufbaus mit hoher Auflösung schrittweise in allen drei Farbkanälen abgetastet, wobei anhand der Flachstellen der Dichteverläufe die Messfeldmitten bzw. möglichen Messpositionen für die späteren eigentlichen Messläute bestimmt werden.; Bei den späteren Messläufen wird dann der Messstreifen nur mehr an den beim Erkennungslauf ermittelten Messpositionen ausgemessen und die dabei gewonnenen Messdaten werden zur Verarbeitung und/oder Anzeige dem Rechner zugeführt. Durch die Aufteilung der Messung in Erkennungs- und Messlauf sowie insbesondere durch die Ermittlung der Messpositionen anhand der Flachstellen in den Dichteverläufen ist eine praktisch vollautomatische Auswertung der Farbmessstreifen unabhänig von deren Aufbau und ohne dass derselbe der Vorrichtung vor vornherein bekannt sein müsste, möglich.

Die EP 1 314 972 beschreibt ein Spektralphotometer und die Verwendung desselben.

Die EP 1 775 565 A1 beschreibt ein Verfahren zur Farbmessung von gedruckten Proben mit Aufhellern.

EP 1 189 898 A1 und EP 0 064 024 A1 offenbaren an einem Messwagen und einer Führungseinheit geführte Farbmessköpfe zur Messung von Farbmessstreifen in zwei Phasen.

W02006/117598 A1 offenbart ein Handfarbmessgerät, das zur automatischen Unterscheidung zwischen verschiedenen Typen von Messstreifen eingerichtet ist.

Durch die vorliegende Erfindung soll bei der Ausmessung einer Farbmesstafel das Problem der Felderkennung unter Einsatz von Beleuchtungen, welche nur einen begrenzten Teil des Spektrums, insbesondere nur den UV-Bereich umfassen, beheben, wobei der Anordnung der Farbmessfelder der Farbmesstafel (Testehart) bezüglich ihrer Reflektionseigenschaften im betroffenen begrenzten Teil des Spektrums keinerlei Beschränkungen auferlegt sein sollen.

Diese der Erfindung zugrundeliegende Aufgabe wird durch das im unabhängigen Anspruch 1 definierte Verfahren bzw. das im unabhängigen Anspruch 5 definierte Handfarbmessgerät gelöst. Weiterbildungen und besonders vorteilhafte Ausgestaltungen des erfindungsgemässen Verfahrens und des erfindungsgemässen Handfarbmessgeräts sind Gegenstand der abhängigen Ansprüche.

Gemäss dem Hauptgedanken der Erfindung wird jede Farbmessfeldreihe im Rahmen von zwei Messdurchgängen zweimal abgetastet, und zwar einmal unter Verwendung von Beleuchtungslicht mit einer spektralen Abdeckung, die für die Erkennung der Farbfelder anhand der Farbmessdaten ausreicht, und einmal unter Verwendung von Beleuchtungslicht des interessierenden eingeschränkten Spektralbereichs, speziell UV-Licht. Besonders zweckmässig und vorteilhaft ist es dabei, die Abtastung der Farbmessfeldreihen jeweils in zwei zueinander entgegengesetzten Richtungen durchzuführen. Im ersten Messdurchgang werden die Farbmessfelder und ihre Positionen bestimmt, und im zweiten Messdurchgang werden die in diesem gewonnenen Messdaten anhand der im ersten Messdurchgang ermittelten Farbmessfeldpositionen den Farbmessfeldern zugeordnet.

Im Folgenden werden das erfindungsgemässe Verfahren und das erfindungsgemässe Handfarbmessgerät anhand der Zeichnung näher erläutert. In der Zeichnung zeigen:
- Fig. 1: eine schematische Skizze einer typischen Farbmesstafel,
- Fig. 2: eine schematische Darstellung des Handfarbmessgeräts im Einsatz beim Ausmessen einer Farbmesstafel,
- Fig. 3: ein Schema der wichtigsten Komponenten des Handfarbmessgeräts und
- Fig. 4: ein Ablaufschema eines Zyklus' des erfindungsgemässen Verfahrens.

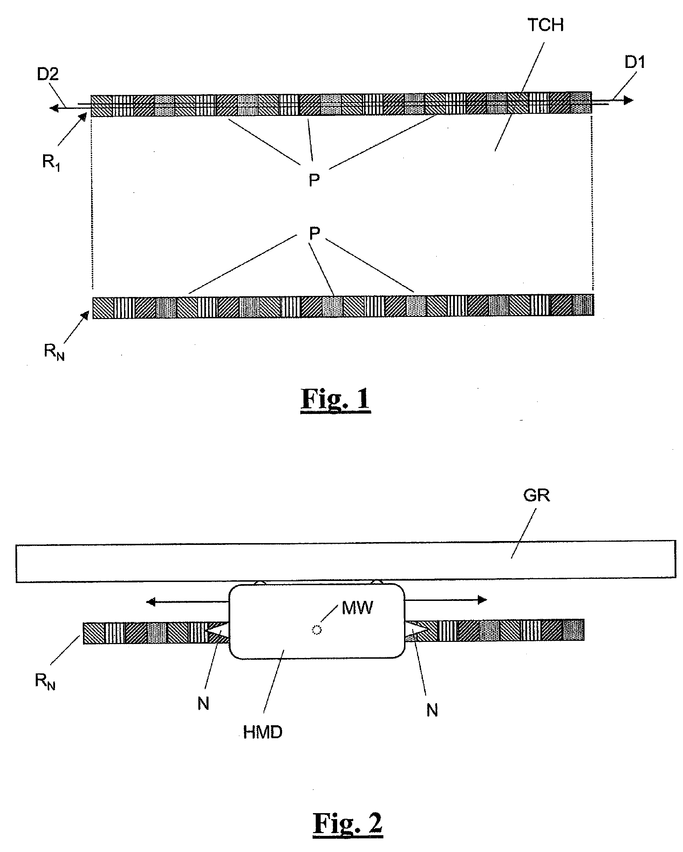

Ein Beispiel einer üblicherweise als Testchart bezeichneten Farbmesstafel ist in Fig. 1 etwas vereinfacht dargestellt. Die Farbmesstafel TCH umfasst eine Anzahl von Messfeldreihen R₁....R_{N}, die jeweils eine Anzahl von nebeneinander angeordneten Farbmessfeldern P enthalten. Die Ausmessung der Farbmesstafel TCH erfolgt reihenweise, wobei gemäss einem ersten wichtigen Aspekt der Erfindung jede der Reihen R₁....R_{N} zweimal in jeweils entgegengesetzten Richtungen D1 bzw. D2 und unter unterschiedlichen Messbedingungen abgetastet wird. Auf diesbezügliche Details wird weiter unten eingegangen.

Die Fig. 2 zeigt eine typische Messkonfiguration für die Abtastung einer Farbmessfeldreihe R_{N}. Ein Handfarbmessgerät HMD ist so über der Farbmessfeldreihe R_{N} positioniert, dass sein Messfenster MW auf der auszumessenden Farbmessfeldreihe zu liegen kommt. Zwei Nasen N am Handfarbmessgerät HMD dienen dabei als Ausrichtungshilfe. Das Handfarbmessgerät HMD befindet sich in körperlicher Anlage an einer Führungsschiene GR, welche parallel zur Farbmessfeldreihe ausgerichtet ist und dem Handfarbmessgerät als Führung dient. Das Handfarbmessgerät HMD ist in an sich bekannter Weise für den abtastenden (scannenden) Betrieb ausgelegt, d.h., es kann während seiner Bewegung entlang der Farbmessfeldreihe selbsttätig in kurzen Abständen eine Vielzahl von Einzelmessungen ausführen und so jeweils eine gesamte Farbmessfeldreihe an jeweils mehreren Stellen pro Farbmessfeld ausmessen. Die beiden Nasen N sind rein beispielsweise zu verstehen, selbstverständlich können auch andere Ausrichtehilfen vorgesehen sein oder auch entfallen.

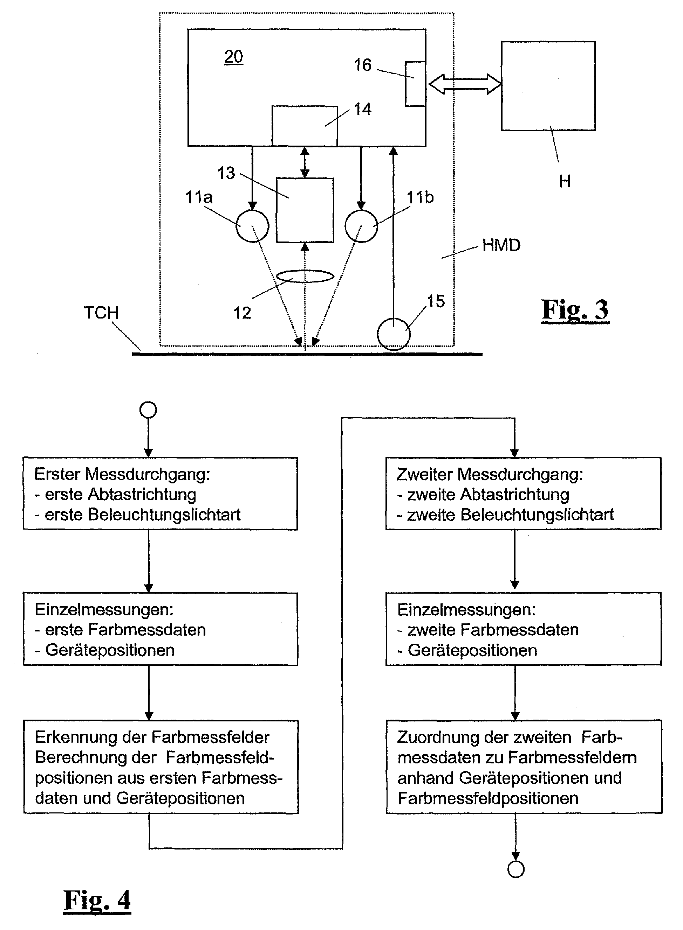

In der Fig. 3 sind die wichtigsten Funktionskomponenten des erfindungsgemässen Handfarbmessgeräts dargestellt. Es umfasst innerhalb eines nicht dargestellten Gerätegehäuses eine Beleuchtungsanordnung 11a-11b zur selektiven Beaufschlagung des Messobjekts (der Farbmessfelder P) mit zwei unterschiedlichen Beleuchtungslichtarten, eine Aufpickanordnung 12 zur Erfassung des vom Messobjekt (den Farbmessfeldern P) zurückgestrahlten Messlichts, eine Wandleranordnung 13 zur wellenlängenspezifischen Aufspaltung des Messlichts und Umwandlung in entsprechende elektrische Signale, eine Auswertungsanordnung 14, welche aus den elektrischen Signalen digitale Farbmessdaten bildet und eine Steuerung 20 für die Beleuchtungsanordnung und die selbsttätige Durch-führung der Einzelmessungen sowie die Erkennung der Farbmessfelder aus den bei den Einzelmessungen gewonnenen Farbmessdaten. Ferner ist das Handfarbmessgerät mit einem mit der Steuerung 20 zusammenarbeitenden Wegsensor 15 ausgestattet, welcher die Position des Handfarbmessgeräts relativ zur Farbmesstafel bei jeder Einzelmessung erfasst. Die Steuerung 20 enthält ausserdem vorzugsweise noch eine Schnittstelle 16 zur Kommunikation mit einem externen Rechner H. Über diese Schnittstelle können Daten und Steuerbefehle mit dem externen Rechner H ausgetauscht werden. Die Steuerung 20 berechnet aus den Farbmessdaten und den Gerätepositionen die Positionen der Farbmessfelder in der jeweiligen Farbmessfeldreihe. Die vom Teil 11a der Beleuchtungsanordnung erzeugte erste Beleuchtungslichtart, typischerweise weisses Licht, deckt einen ausreichenden Teil des Spektrums ab, um die Erkennung der Farbmessfelder aus den Farbmessdaten zu ermöglichen. Die vom Teil 11b der Beleuchtungsanordnung erzeugte zweite Beleuchtungslichtart deckt keinen für die Felderkennung ausreichenden Teil des Spektrums ab und ist typischerweise UV-Licht. Soweit entspricht das erfindungsgemässe Handfarbmessgerät HMD den bekannten Geräten dieser Art, wie sie in den einleitend erwähnten Dokumenten zum Stand der Technik in allen Details beschrieben sind. Der Fachmann bedarf also diesbezüglich keiner näheren Erläuterung. Der Unterschied des erfindungsgemässen Handfarbmessgeräts gegenüber dem bekannten Stand der Technik liegt in der besonderen Ausbildung der Steuerung 20, um die für die Durchführung des erfindungsgemässen Verfahrens erforderlichen Funktionalitäten zu implementieren. Darauf wird nachstehend noch näher eingegangen.

Bei der Ausmessung einer Farbmesstafel mittels eines Handfarbgeräts ist es erforderlich, die einzelnen Farbmessfelder zu erkennen, um ihnen die ermittelten Farbmessdaten korrekt zuordnen zu können. Bei Messungen mit Beleuchtungslicht eines eingeschränkten Spektralbereichs, insbesondere nur UV-Licht, ist die Erkennung der Farbmessfelder anhand der Messdaten jedoch schwierig bis unmöglich, da dazu ein ausreichender Unterschied in der Reflektion der benachbarten Farbfelder im betreffenden eingeschränkten Spektralbereich, speziell UV-Bereich erforderlich ist. Durch geeignete Ausgestaltung und Anordnung der Farbmessfelder kann dies zwar u.U. erreicht werden, jedoch ergibt sich dadurch eine massive Einschränkung bei der Gestaltungsfreiheit für das Testchart.

Diese Problematik wird durch das erfindungsgemässe Verfahren behoben, indem jede Farbmessfeldreihe zweimal abgetastet wird, und zwar einmal unter Verwendung von Beleuchtungslicht mit einer spektralen Abdeckung, die für die Erkennung der Farbfelder anhand der Farbmesswerte ausreicht, und einmal unter Verwendung von Beleuchtungslicht des eingeschränkten Spektralbereichs, speziell UV-Licht. Besonders zweckmässig und vorteilhaft ist es dabei, die Abtastung der Farbmessfeldreihen jeweils in zwei zueinander entgegengesetzten Richtungen durchzuführen.

Die Ausmessung der Farbmesstafel erfolgt also reihenweise und pro Farbmessfeldreihe in zwei Messdurchgängen. In einem ersten Messdurchgang wird das Handmessgerät HMD in einer ersten Richtung (Pfeil D1 in Fig. 1) über die Farbmessfelder P der auszumessenden Farbmessfeldreihe geführt. Dabei aktiviert die Steuerung 20 den Teil 11a der Beleuchtungsanordnung, so dass das Messobjekt, d.h. die Farbmessfeldreihe mit erstem, weissem Beleuchtungslicht bzw. allgemeiner erstem Beleuchtungslicht mit für die Felderkennung ausreichender spektraler Abdeckung beaufschlagt wird. Während des ersten Messdurchgangs veranlasst die Steuerung 20 eine Vielzahl von in kurzen Abständen aufeinanderfolgenden Einzelmessungen und speichert die dabei gewonnenen ersten Farbmessdaten ab. Gleichzeitig erfasst der Wegsensor 15 für jede Einzelmessung die jeweilige Geräteposition des Handfarbmessgeräts HMD relativ zu einer Referenzposition. Aus den abgespeicherten ersten Farbmessdaten und den zugehörigen gemessenen Gerätepositionen werden dann in an sich bekannter Weise die Farbmessfelder erkannt und den zugehörigen gemessenen Gerätepositionen zugewiesen. Die innerhalb der erkannten Farbmessfelder liegenden Gerätepositionen werden im Folgenden als Farbmessfeldpositionen bezeichnet.

Im anschliessenden zweiten Messdurchgang wird das Handmessgerät HMD in entgegengesetzter Richtung (Pfeil D2 in Fig. 1) über die Farbmessfelder P der auszumessenden Farbmessfeldreihe in die ursprüngliche Ausgangsposition zurückgeführt. Dabei aktiviert die Steuerung 20 den Teil 11b der Beleuchtungsanordnung, so dass die Farbmessfeldreihe nur mit UV-Beleuchtungslicht bzw. allgemeiner zweitem Beleuchtungslicht des eingeschränkten, für die Felderkennung nicht ausreichenden Spektralbereichs beaufschlagt wird. Auch während des zweiten Messdurchgang veranlasst die Steuerung 20 eine Vielzahl von in kurzen Abständen aufeinanderfolgenden Einzelmessungen und speichert die dabei gewonnenen zweiten Farbmessdaten ab. Der Wegsensor 15 erfasst dabei wiederum für jede Einzelmessung die jeweilige Geräteposition des Handfarbmessgeräts HMD relativ zur Referenzposition. Für jedes Farbmessfeld liegen jetzt die Messdaten und die Gerätepositionen der zugehörigen Einzelmessungen für beide Beleuchtungsarten vor. Anhand der aus dem ersten Messdurchgang ermittelten Farbmessfeldpositionen können nun die im zweiten Messdurchgang gemessenen zweiten Farbmessdaten eindeutig den jeweiligen Farbmessfeldern zugeordnet werden.

Die Fig. 4 illustriert den vorstehend beschriebenen, für die Ausmessung jeweils einer Reihe von Farbmessfeldern geltenden Zyklus des erfindungsgemässen Verfahrens in Form eines Blockschemas. Der Verfahrenszyklus wird für jede Farbmessfeldreihe wiederholt, bis alle interessierenden Reihen der Farbmesstafel ausgemessen sind.

Die Erkennung der Farbmessfelder aus den ersten Farbmessdaten und den zugehörigen Gerätepositionen des ersten Messdurchgangs sowie die Zuordnung der im zweiten Messdurchgang gewonnenen zweiten Farbmessdaten zu den Farbmessfeldern kann entweder durch die Steuerung 20 selbst oder ganz oder teilweise durch entsprechende Datenverarbeitung im externen Rechner H erfolgen. Dabei kann die Erkennung der Farbmessfelder aus den ersten Farbmessdaten und den zugehörigen Gerätepositionen des ersten Messdurchgangs noch vor dem zweiten Messdurchgang oder auch erst nach dem zweiten Messdurchgang oder überhaupt erst nach der vollständigen Ausmessung aller interessierenden Farbmessfeldreihen der Farbmesstafel erfolgen.

Falls die Erkennung der Farbmessfelder aus den ersten Farbmessdaten und den zugehörigen Gerätepositionen des ersten Messdurchgangs vor dem zweiten Messdurchgang vorgenommen wird, kann die Ausmessung der Farbmessfelder im zweiten Messdurchgang auch auf die im ersten Messdurchgang ermittelten Farbmessfeldpositionen beschränkt werden.

## Patentansprüche

1. Verfahren zur Ausmessung einer mindestens eine Reihe (R₁) von nebeneinander angeordneten Farbmessfeldern (P) umfassenden Farbmesstafel (TCH) unter Einsatz eines Handfarbmessgeräts (HMD), welches vorzugsweise mittels einer Führung (GR) über die Farbmessfelder der Reihe (R₁) bewegt wird und diese dabei in einer Vielzahl von Einzelmessungen ausmisst, **dadurch gekennzeichnet, dass** das Handfarbmessgerät (HMD) in zwei Messdurchgängen über die Farbmessfelder (P) der Reihe (R₁) geführt wird, dass in einem ersten Messdurchgang unter Verwendung einer ersten Beleuchtungslichtart erste Farbmessdaten der Farbmessfelder (P) gemessen werden und anhand der ersten Farbmessdaten eine Felderkennung durchgeführt wird, wobei die erste Beleuchtungslichtart einen ausreichenden Teil des Spektrums abdeckt, um die Felderkennung mittels der ersten Farbmessdaten zu ermöglichen, und dass in einem anschliessenden zweiten Messdurchgang unter Verwendung einer zweiten Beleuchtungslichtart, welche keinen für die Felderkennung ausreichenden Teil des Spektrums abdeckt, zweite Farbmessdaten der Farbmessfelder (P) gemessen werden, und dass die zweiten Farbmessdaten den Farbmessfeldern anhand der im ersten Messdurchgang erfolgten Felderkennung zugeordnet werden.

2. Verfahren nach Anspruch 1, **dadurch gekennzeichnet, dass** das Handfarbmessgerät (HMD) während des zweiten Messdurchgangs in zur Bewegungsrichtung (D1) während des ersten Messdurchgangs entgegensetzter Richtung (D2) über die Farbmessfelder (P) der Reihe (R₁) geführt wird.

3. Verfahren nach Anspruch 1 oder 2, **dadurch gekennzeichnet, dass** im ersten Messdurchgang für jede Einzelmessung die relative Geräteposition des Handfarbmessgeräts (HMD) gemessen wird und die Gerätepositionen den Farbmessfelden (P) zugeordnet werden, und dass im zweiten Messdurchgang für jede Einzelmessung die relative Geräteposition des Handfarbmessgeräts (HMD) gemessen wird und die zweiten Farbmessdaten den Farbmessfeldern (P) anhand der im ersten und zweiten Messdurchgang gemessenen Gerätepositionen zugeordnet werden.

4. Verfahren nach einem der vorangehenden Ansprüche, **dadurch gekennzeichnet, dass** als zweite Beleuchtungslichtart im wesentlichen UV-Licht verwendet wird.

5. Handfarbmessgerät, ausgelegt für den abtastenden Betrieb, für die farbmetrische Ausmessung der Farbmessfelder einer Farbmesstafel, bei welchem abtastenden Betrieb das Handfarbmessgerät vorzugsweise mittels einer Führung (GR) über eine Reihe (R₁) von Farbmessfeldern (P) der Farbmesstafel (TCH) geführt wird und dabei selbsttätig eine Vielzahl von Einzelmessungen durchführt, mit einer Beleuchtungsanordnung (11a-11b) zum Beaufschlagen der Farbmesstafel (TCH) mit einer ersten und einer zweiten Beleuchtungslichtart, mit einer Aufpickanordnung (12) zum Erfassen des von den Farbmessfeldern (P) zurückgestrahlten Messlichts, mit einer Wandleranordnung (13), die das erfasste Messlicht in entsprechende elektrische Signale umwandelt, mit einer Auswertungsanordnung (14), welche aus den elektrischen Signalen digitale Farbmessdaten bildet, und mit einer elektronischen Steuerung (20) für die Einzelmessungen und die Beleuchtungsanordnung und für die Erkennung der Farbmessfelder (P) aus den Farbmessdaten, wobei die erste Beleuchtungslichtart einen ausreichenden Teil des Spektrums abdeckt, um die Erkennung der Farbmessfelder aus den Farbmessdaten zu ermöglichen und die zweite Beleuchtungslichtart keinen für die Felderkennung ausreichenden Teil des Spektrums abdeckt, **dadurch gekennzeichnet, dass** die Steuerung (20) dazu ausgebildet ist, während eines ersten Messdurchgangs, bei dem das Handfarbmessgerät (HMD) in einer ersten Richtung über eine Reihe von Farbmessfeldern (P) geführt wird, die Farbmessfelder (P) unter Verwendung der ersten Beleuchtungslichtart auszumessen und aus dabei gewonnenen ersten Farbmessdaten die Farbmessfelder (P) zu erkennen, und während eines anschliessenden zweiten Messdurchgangs, bei dem das Handfarbmessgerät (HMD) in einer zweiten Richtung über die Reihe von Farbmessfeldern (P) geführt wird, die Farbmessfelder unter Verwendung der zweiten Beleuchtungslichtart auszumessen und zweite Farbmessdaten zu bestimmen und die zweiten Farbmessdaten den Farbmessfeldern anhand der im ersten Messdurchgang erfolgten Erkennung der Farbmessfelder zuzuordnen.

6. Handfarbmessgerät nach Anspruch 5, dadurch gekennzeichet, dass die erste und die zweite Richtung (D1, D2) entgegengesetzt sind und dass die Steuerung (20) dazu ausgebildet ist, die Ausmessung der Farbmessfelder (P) in zwei entgegengesetzten Bewegungsrichtungen des Handfarbmessgeräts durchzuführen.

7. Handfarbmessgerät nach Anspruch 5 oder 6, **dadurch gekennzeichnet, dass** es einen mit der Steuerung (20) zusammenarbeitenden Wegsensor (15) aufweist, der im ersten Messdurchgang für jede Einzelmessung die relative Geräteposition des Handfarbmessgeräts misst, dass die Steuerung (20) die Gerätepositionen des Handfarbmessgeräts den Farbmessfeldern zuordnet, dass der Wegsensor (15) im zweiten Messdurchgang die relative Geräteposition des Handfarbmessgeräts misst und dass die Steuerung (20) die zweiten Farbmessdaten den Farbmessfeldern (P) anhand der im ersten und zweiten Messdurchgang gemessenen Gerätepositionen zuordnet.

8. Handfarbmessgerät nach einem der Ansprüche 5-7, **dadurch gekennzeichnet, dass** die Beleuchtungsanordnung (11a-11b) als zweite Beleuchtungslichtart UV-Licht bereitstellt.

## Claims

1. A method of measuring a colour measurement table (TCH) comprising at least one row (R₁) of colour measurement strips (P) arranged adjacent to one another whilst using a hand-held colour measuring appliance (HMD) which is preferably moved by means of a guide (GR) over the colour measurement strips of the row (R₁) and which measures the latter during this in a plurality of individual measurements, **characterized in that** the hand-held colour measuring appliance (HMD) is guided in two measurement passes over the colour measurement strips (P) of the row (R₁), first colour measurement data of the colour measurement strips (P) are measured in a first measurement pass whilst using a first type of illumination light and a strip recognition is carried out with reference to the first colour measurement data, wherein the first type of illumination light covers a portion of the spectrum sufficient to allow the strip recognition by means of the first colour measurement data, and second colour measurement data of the colour measurement strips (P) are measured in a following second measurement pass whilst using a second type of illumination light which does not cover a portion of the spectrum sufficient for the strip recognition, and the second colour measurement data are associated with the colour measurement strips with reference to the strip recognition carried out in the first measurement pass.

2. A method according to claim 1, **characterized in that** during the second measurement pass the hand-held colour measuring appliance (HMD) is guided over the colour measurement strips (P) of the row (R₁) in a direction (D2) opposed to the movement direction (D1) during the first measurement pass.

3. A method according to claim 1 or 2, **characterized in that** the relative position of the hand-held colour measuring appliance (HMD) is measured in the first measurement pass for each individual measurement and the positions of the appliance are associated with the colour measurement strips (P), and the relative position of the hand-held colour measuring appliance (HMD) is measured in the second measurement pass for each individual measurement and the second colour measurement data are associated with the colour measurement strips (P) with reference to the positions of the appliance measured in the first and second measurement passes.

4. A method according to any one of the preceding claims, **characterized in that** UV light is used essentially as the second type of illumination light.

5. A hand-held colour measuring appliance designed for scanning operation for the colorimetric measurement of the colour measurement strips of a colour measurement table, in which scanning operation the hand-held colour measuring appliance is preferably guided over a row (R₁) of colour measurement strips (P) of the colour measurement table (TCH) by means of a guide (GR) and a plurality of individual measurements are carried out automatically in this case, with an illumination device (11a - 11b) for acting upon the colour measurement table (TCH) with a first and a second type of illumination light, with a picking device (12) for detecting the measurement light reflected by the colour measurement strips (P), with a transducer device (13) which converts the detected measurement light into corresponding electrical signals, with an evaluation device (14) which forms digital colour measurement data from the electrical signals, and with an electronic control means (20) for the individual measurements and the illumination device and for the recognition of the colour measurement strips (P) from the colour measurement data, wherein the first type of illumination light covers a portion of the spectrum sufficient to allow the recognition of the colour measurement strips from the colour measurement data, and the second type of illumination light does not cover a portion of the spectrum sufficient for the strip recognition, **characterized in that** the control means (20) is designed in such a way as to measure the colour measurement strips (P) whilst using the first type of illumination light during a first measurement pass in which the hand-held colour measuring appliance (HMD) is guided over a row of colour measurement strips (P) in a first direction, and to recognize the colour measurement strips (P) from first colour measurement data obtained during this, and to measure the colour measurement strips whilst using the second type of illumination light during a subsequent second measurement pass in which the hand-held colour measuring appliance (HMD) is guided over the row of colour measurement strips (P) in a second direction, and to determine second colour measurement data, and to associate the second colour measurement data with the colour measurement strips with reference to the recognition of the colour measurement strips carried out in the first measurement pass.

6. A hand-held colour measuring appliance according to claim 5, **characterized in that** the first and the second direction (D1, D2) are opposed, and the control means (20) is designed in such a way as to carry out the measurement of the colour measurement strips (P) in two opposed directions of movement of the hand-held colour measuring appliance.

7. A hand-held colour measuring appliance according to claim 5 or 6, **characterized in that** it has a path sensor (15) which co-operates with the control means (20) and which measures the relative position of the hand-held colour measuring appliance in the first measurement pass for each individual measurement, the control means (20) associates the positions of the hand-held colour measuring appliance with the colour measurement strips, the path sensor (15) measures the relative position of the hand-held colour measuring appliance in the second measurement pass, and the control means (20) associates the second colour measurement data with the colour measurement strips (P) with reference to the positions of the appliance measured in the first and second measurement pass.

8. A hand-held colour measuring appliance according to any one of claims 5 to 7, **characterized in that** the illumination device (11a - 11b) provides UV light as the second type of illumination light.

## Revendications

1. Méthode pour mesurer un panneau de mesure de couleur (TCH) comprenant au moins une rangée (R₁) de champs de mesure de couleur (P) disposés côte à côte en utilisant un appareil de mesure de couleur portatif (HMD), lequel est déplacé au-dessus des champs de mesure de couleur de la rangée (R₁), de préférence au moyen d'un guidage (GR) et les mesure en une pluralité de mesures individuelles, **caractérisée en ce que** l'appareil de mesure de couleur portatif (HMD) est guidé au cours de deux phases de mesure au-dessus des champs de mesure de couleur (P) de la rangée (R₁), que lors d'une première phase de mesure, des premières données de mesure de couleur des champs de mesure (P) sont mesurées en utilisant un premier type de lumière d'éclairage, et qu'une reconnaissance de champ est effectuée au moyen des premières données de mesure de couleur, le premier type de lumière d'éclairage recouvrant une partie suffisante du spectre pour permettre la reconnaissance de champ au moyen des premières données de mesure de couleur, et que lors d'une deuxième phase de mesure ultérieure, des deuxièmes données de mesure de couleur des champs de mesure (P) sont mesurées en utilisant un deuxième type de lumière d'éclairage qui ne couvre pas une partie du spectre suffisante pour la reconnaissance de champ et que les deuxièmes données de mesure de couleur sont attribuées aux champs de mesure de couleur en se fondant sur la reconnaissance de champ effectuée lors de la première phase de mesure.

2. Méthode selon la revendication 1, **caractérisée en ce qu'**au cours de la deuxième phase de mesure, l'appareil de mesure de couleur portatif (HMD) est guidé au-dessus des champs de mesure de couleur (P) de la rangée (R₁) dans la direction (D2) opposée à la direction de mouvement (D1) de la première phase de mesure.

3. Méthode selon la revendication 1 ou 2, **caractérisée en ce que** lors de la première phase de mesure, la position relative de l'appareil de mesure de couleur portatif (HMD) est mesurée pour chaque mesure individuelle et que les positions de l'appareil sont attribuées aux champs de mesure de couleur (P), et que lors de la deuxième phase de mesure, la position relative de l'appareil de mesure de couleur portatif (HMD) est mesurée pour chaque mesure individuelle et que les deuxièmes données de mesure de couleur sont attribuées aux champs de mesure de couleur (P) en se fondant sur les positions de l'appareil mesurées lors de la première et de la deuxième phase de mesure.

4. Méthode selon l'une quelconque des revendications précédentes, **caractérisée en ce que**, de la lumière UV est essentiellement utilisée en tant que deuxième type de lumière d'éclairage.

5. Appareil de mesure de couleur portatif conçu pour une opération de balayage pour la mesure colorimétrique des champs de mesure de couleur d'un panneau de mesure de couleur, l'appareil de mesure de couleur portatif étant guidé lors de l'opération de balayage au moyen d'un guidage (GR) au-dessus d'une rangée (R₁) de champs de mesure de couleur (P) du panneau de mesure de couleur (TCH) et y met en oeuvre automatiquement une pluralité de mesures individuelles, avec un dispositif d'éclairage (11a - 11b) pour appliquer un premier et un deuxième type de lumière d'éclairage au panneau de mesure de couleur (TCH), avec un dispositif de captage (12) pour la captation de la lumière de mesure reflétée par les champs de mesure de couleur (P), avec un dispositif de transformation (13) qui transforme la lumière captée en signaux électriques correspondants, avec un dispositif de traitement (14) qui produit des données de mesure de couleur numériques à partir des signaux électriques, et avec une commande électronique (20) pour les mesures individuelles et le dispositif d'éclairage et pour la reconnaissance des champs de mesure de couleur (P) à partir des données de mesure de couleur, le premier type de lumière d'éclairage couvrant une partie suffisante du spectre pour permettre la reconnaissance des champs de mesure de couleur à partir des données de mesure de couleur et le deuxième type de lumière d'éclairage ne couvrant pas une partie du spectre suffisante pour la reconnaissance des champs, **caractérisé en ce que** la commande (20) est configurée pour mesurer les champs de mesure de couleur (P) en utilisant le premier type de lumière d'éclairage lors d'une première phase de mesure lors de laquelle l'appareil de mesure de couleur portatif (HMD) est guidé dans une première direction au-dessus d'une rangée de champs de mesure de couleur (P), et pour identifier les champs de mesure de couleur (P) à partir des premières données de mesure de couleur obtenues, et, lors d'une deuxième phase de mesure ultérieure, lors de laquelle l'appareil de mesure de couleur portatif (HMD) est guidé dans une deuxième direction au-dessus de la rangée de champs de mesure de couleur (P), pour mesurer les champs de mesure de couleur en utilisant le deuxième type de lumière d'éclairage et pour déterminer des deuxièmes données de mesure de couleur et attribuer les deuxièmes données de mesure de couleur aux champs de mesure de couleur en se fondant sur la reconnaissance des champs de mesure de couleur effectuée lors de la première phase de mesure.

6. Appareil de mesure de couleur portatif selon la revendication 5, **caractérisé en ce que** la première et la deuxième direction (D1, D2) sont opposées et que la commande (20) est configurée pour mettre en oeuvre la mesure des champs de mesure de couleur (P) dans deux directions de mouvement opposées de l'appareil de mesure de couleur portatif.

7. Appareil de mesure de couleur portatif selon la revendication 5 ou 6, **caractérisé en ce qu'**il comprends un capteur de distance (15) coopérant avec la commande (20) qui, lors de la première phase de mesure, mesure la position relative de l'appareil de mesure de couleur portatif pour chaque mesure individuelle, que la commande (20) attribue les positions de l'appareil de mesure de couleur portatif aux champs de mesure de couleur, que, lors de la deuxième phase de mesure, le capteur de distance (15) mesure la position relative de l'appareil de mesure de couleur portatif et que la commande (20) attribue les deuxièmes données de mesure aux champs de mesure de couleur (P) en se fondant sur les positions de l'appareil mesurées lors de la première et de la deuxième phase de mesure.

8. Appareil de mesure de couleur portatif selon l'une quelconque des revendications 5 - 7, **caractérisé en ce que** le dispositif d'éclairage (11a - 11b) met à disposition une lumière UV en tant que deuxième type de lumière d'éclairage.
